# EUROPEAN PATENT APPLICATION

(11) **EP 3 098 765 A1**
(43) Date of publication of application: **30.11.2016**
(21) Application number: 16170426.7
(22) Date of filing: 19.05.2016
(51) Int. Cl.: G06Q 10/10, G06Q 50/00

(54) **METHOD AND APPARATUS FOR RECOMMENDING CLOUD CARD**

(30) Priority: 26.05.2015 CN 201510276603
(71) Applicant: Xiaomi Inc., Beijing 100085 (CN)
(72) Inventor: BAO, Xiehao, 100085 Haidian District (CN); QIU, Shiding, 100085 Haidian District (CN); NIU, Kun, 100085 Haidian District (CN)
(74) Representative: Robson, Aidan John

(57) **Abstract**

The present disclosure refers to a method and an apparatus for recommending a cloud card. The method includes: acquiring a cloud card of a first contact person and contact information stored in a terminal of a second contact person, the cloud card comprising a cloud card photo, the contact information comprising a contact photo; recommending the cloud card of the first contact person to the second contact person, if the cloud card photo matches the contact photo.

## Description

### TECHNICAL FIELD

The present disclosure generally relates to the field of computer technology, and more particularly, to a method and an apparatus for recommending a cloud card.

### BACKGROUND

In the related art, with the rapid development of computer technology, the smart terminal has already become a daily use in people's life. Some social applications may be installed in the smart terminal. The user records contact information and contact photos which may not match contact persons in the social applications, and the user may upload the contact information and contact photos to the server for generating a cloud card and publishing it, such that other users may see the cloud card of this contact person.

### SUMMARY

Embodiments of the present disclosure provide a method and an apparatus for recommending a cloud card, such that while a cloud card of a contact person is recommended to other users, an accuracy in recommending the cloud card is improved.

According to a first aspect of embodiments of the present disclosure, there is provided a method for recommending a cloud card, including:
acquiring a cloud card of a first contact person and contact information stored in a terminal of a second contact person, the cloud card comprising a cloud card photo, the contact information comprising a contact photo;
recommending the cloud card of the first contact person to the second contact person, if the cloud card photo matches the contact photo.

The technical solution provided by the embodiment of the present disclosure may include following advantages. The cloud card of the first contact person matched with the contact photo is acquired in a server, and the cloud card of the first contact person is pushed to the second contact person. By judging whether the cloud card in the server matches the contact information stored in the terminal of the second person according to the photo, an accuracy in matching the cloud card and the contact information is improved while the cloud card is recommended to the second contact person.

The method further includes:
calculating a first similarity between the cloud card photo and the contact photo; and
determining that the cloud card photo matches the contact photo, if the first similarity reaches a predetermined similarity.

The technical solution provided by the embodiment of the present disclosure may include following advantages. By judging the first similarity, it is determined whether the cloud card photo matches the contact photo. Since the cloud card photo and the contact photo of a same person may mismatch, when the first similarity reaches the predetermined similarity, it may be determined that the cloud card and the contact information refer to a same person, thus further improving an accuracy in matching the cloud card and the contact information while the cloud card is recommended to the second contact person.

The method further includes:
extracting a face image from the cloud card photo and the contact photo, respectively;
comparing the face image of the cloud card photo with the face image of the contact photo; and
determining that the cloud card photo matches the contact photo, if the face image of the cloud card photo matches the face image of the contact photo.

The technical solution provided by the embodiment of the present disclosure may include following advantages. By judging the face images of the cloud card photo and the contact photo, it is determined whether the cloud card photo matches the contact photo. When the face image of the cloud card photo matches the face image of the contact photo, it may be determined that the cloud card and the contact information refer to a same person, which increases a speed in judging whether the face image of the cloud card photo matches the face image of the contact photo, and further improves an accuracy in matching the cloud card and the contact information while the cloud card is recommended to the second contact person.

The method further includes:
determining an occurrence number of the cloud card photo or the contact photo in cloud card photos and contact photos, if the first similarity reaches a predetermined similarity;
determining that the cloud card photo matches the contact photo, if the occurrence number is less than or equal to a predetermined number.

The technical solution provided by the embodiment of the present disclosure may include following advantages. Different contact persons may select some same network pictures as their contact photos or cloud card photos. When the occurrence number of the cloud card photo or the contact photo is larger than the predetermined number, it may be determined that the photo may be of a plurality of contact persons or cloud cards rather than a cloud card photo or contact photo of a same person. Therefore, when the occurrence number is less than or equal to the predetermined number, it is determined that the cloud card photo matches the contact photo, thus further improving an accuracy in judging whether the cloud card photo matches the contact photo.

The method further includes:
calculating a second similarity between the cloud card photo and the contact photo according to the occurrence number and the first similarity, if the occurrence number is larger than the predetermined number;
determining that the cloud card photo mismatches the contact photo, if the second similarity is less than the predetermined similarity.

The technical solution provided by the embodiment of the present disclosure may include following advantages. The second similarity between the cloud card photo and the contact photo is calculated according to the occurrence number of the cloud card photo or the contact photo, and it is determined that the cloud card photo mismatches the contact photo, if the second similarity is less than the predetermined similarity. Different contact persons may select some same network pictures as their contact photos or cloud card photos. The larger the occurrence number of the cloud card photo or the contact photo is, the less the similarity between the cloud card photo and the contact photo is, and thus it may be determined that the photo may be of a plurality of contact persons or cloud cards rather than a cloud card photo or contact photo of a same person. Therefore, when the second similarity is less than the predetermined similarity, it is determined that the cloud card photo mismatches the contact photo, thus further improving an accuracy in judging whether the cloud card photo matches the contact photo.

The method further includes:
performing a normalization process on the cloud card photo and the contact photo to obtain a standard photo of each of the cloud card photo and the contact photo;
extracting a feature point from the standard photo according to a predetermined rule;
comparing the feature points of the standard photos of the cloud card photo and the contact photo;
determining whether the cloud card photo matches the contact photo according to a comparison result of the feature point.

The technical solution provided by the embodiment of the present disclosure may include following advantages. By comparing the feature points of the standard photos of the cloud card photo and the contact photo, it is determined whether the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

The method further includes:
performing a normalization process on the face image of each the cloud card photo and the contact photo to obtain a standard face image of each of the cloud card photo and the contact photo;
extracting a feature point from the standard face image according to a predetermined rule;
comparing the feature points of the standard face images of the cloud card photo and the contact photo; and
determining whether the face image of the cloud card photo matches the face image of the contact photo according to a comparison result of the feature point.

The technical solution provided by the embodiment of the present disclosure may include following advantages. By comparing the feature points of the standard face images of the cloud card photo and the contact photo, it is determined whether the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

According to a second aspect of embodiments of the present disclosure, there is provided an apparatus for recommending a cloud card, including:
an acquiring module, configured to acquire a cloud card of a first contact person and contact information stored in a terminal of a second contact person, the cloud card comprising a cloud card photo, the contact information comprising a contact photo;
a determining module, configured to determine whether the cloud card photo matches the contact photo; and
a recommending module, configured to recommend the cloud card of the first contact person to the second contact person, if the cloud card photo matches the contact photo.

The determining module includes:
a first calculating sub-module, configured to calculate a first similarity between the cloud card photo and the contact photo; and
a first determining sub-module, configured to determine that the cloud card photo matches the contact photo, if the first similarity reaches a predetermined similarity.

The determining module includes:
an extracting sub-module, configured to extract a face image from the cloud card photo and the contact photo, respectively;
a first comparing sub-module, configured to compare the face image of the cloud card photo with the face image of the contact photo; and
a second determining sub-module, configured to determine that the cloud card photo matches the contact photo, if the face image of the cloud card photo matches the face image of the contact photo.

The determining module further includes:
a third determining sub-module, configured to determine an occurrence number of the cloud card photo or the contact photo in cloud card photos and contact photos, if the first similarity reaches a predetermined similarity; and
a fourth determining sub-module, configured to determine that the cloud card photo matches the contact photo, if the occurrence number is less than or equal to a predetermined number.

The determining module further includes:
a second calculating sub-module, configured to calculate a second similarity between the cloud card photo and the contact photo according to the occurrence number and the first similarity, if the occurrence number is larger than the predetermined number; and
a fifth determining sub-module, configured to determine that the cloud card photo mismatches the contact photo, if the second similarity is less than the predetermined similarity.

The apparatus further includes:
a first processing module, configured to perform a normalization process to the cloud card photo and the contact photo to obtain a standard photo of each of the cloud card photo and the contact photo; and
a first extracting module, configured to extract a feature point from the standard photo according to a predetermined rule,
in which the determining module includes:
   a second comparing sub-module, configured to compare the feature points of the standard photos of the cloud card photo and the contact photo; and
   a sixth determining sub-module, configured to determine whether the cloud card photo matches the contact photo according to a comparison result of the feature point.

The apparatus further includes:
a second processing module, configured to perform a normalization process to the face image of each the cloud card photo and the contact photo to obtain a standard face image of each of the cloud card photo and the contact photo; and
a second extracting module, configured to extract a feature point from the standard face image according to a predetermined rule,
in which the first comparing sub-module is further configured to compare the feature points of the standard face images of the cloud card photo and the contact photo; to determine whether the face image of the cloud card photo matches the face image of the contact photo according to a comparison result of the feature point.

According to a third aspect of embodiments of the present disclosure, there is provided an apparatus for recommending a cloud card, including:
a processor; and
a memory for storing instructions executable by the processor;
in which the processor is configured to:
   acquire a cloud card of a first contact person and contact information stored in a terminal of a second contact person, the cloud card comprising a cloud card photo, the contact information comprising a contact photo; and
   recommend the cloud card of the first contact person to the second contact person, if the cloud card photo matches the contact photo.

It is to be understood that both the foregoing general description and the following detailed description are example and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for recommending a cloud card according to an example embodiment.
Fig. 2 is a detailed flow chart showing a method for recommending a cloud card according to an example embodiment.
Fig. 3 is a detailed flow chart showing a method for recommending a cloud card according to an example embodiment.
Fig. 4 is a detailed flow chart showing a method for recommending a cloud card according to an example embodiment.
Fig. 5 is a detailed flow chart showing a method for recommending a cloud card according to an example embodiment.
Fig. 6 is a block diagram of an apparatus for recommending a cloud card according to an example embodiment.
Fig. 7 is a block diagram of a determining module in an apparatus for recommending a cloud card according to an example embodiment.
Fig. 8 is a block diagram of a determining module in an apparatus for recommending a cloud card according to an example embodiment.
Fig. 9 is a block diagram of a determining module in an apparatus for recommending a cloud card according to an example embodiment.
Fig. 10 is a block diagram of a determining module in an apparatus for recommending a cloud card according to an example embodiment.
Fig. 11 is a block diagram of an apparatus for recommending a cloud card according to an example embodiment.
Fig. 12 is a block diagram of an apparatus for recommending a cloud card according to an example embodiment.
Fig. 13 is a block diagram of an apparatus for recommending a cloud card according to an example embodiment.
Fig. 14 is a block diagram of an apparatus for recommending a cloud card according to an example embodiment.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the invention. Instead, they are merely examples of apparatuses and methods consistent with aspects related to the invention as recited in the appended claims.

In the related art, with the rapid development of computer technology, the smart terminal has already become a daily use in people's life. Some social applications may be installed in the smart terminal. The user records contact information and contact photos of different contact persons in the social applications, and the user may upload the contact information and contact photo to the server for generating a cloud card and publishing it, such that other users may see the cloud card of this contact person.

For example, a user A's information such as name, address is stored in the user A's cloud card, while the user A's information such as name, address is stored in a user B's contact. If it is determined that the user A's cloud card matches the contact person A stored in the user B's contact, the user A's cloud card is recommended to the user B.

In the related art, however, there is the fact that the user A's information such as name, address stored in the user A's cloud card may mismatch the contact person A's information such as name, address stored in the user B's contact.

For example, the user A is the user B's father, and the user A uploads his cloud card including a "name" "Wang Er". However, in the user B's contact, the user A's "name" is "Dad". In this case, the cloud card of the user A cannot match the information of contact person A in the use B's contact. An "address" of the user A is A's family address, while the "address" of the user A in the user B's contact is A's company address. Thus, the cloud card of the user A cannot match the information of contact person A in the use B's contact.

Embodiments of the present disclosure provide a method and an apparatus for recommending a cloud card, such that an accuracy in recommending the cloud card is improved while a cloud card of a contact person is recommended to other users. The cloud card of the first contact person matched with the contact photo is acquired in a server, and the cloud card of the first contact person is pushed to the second contact person. By judging whether the cloud card in the server matches the contact information stored in the terminal of the second person according to the photo, an accuracy in matching the cloud card and the contact information is improved while the cloud card is recommended to the second contact person.

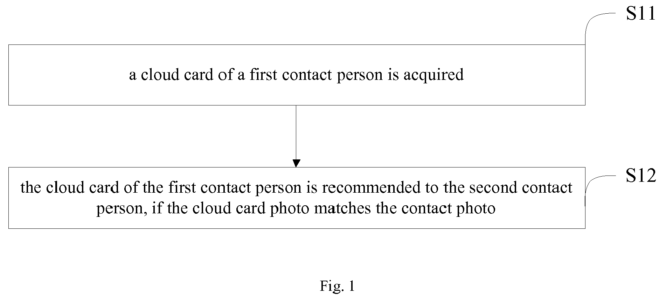

Fig. 1 is a flow chart showing a method for recommending a cloud card according to an example embodiment. Referring to Fig. 1, the method which may be used in a server includes the following steps.

In step S11, a cloud card of a first contact person and contact information stored in a terminal of a second contact person are acquired, the cloud card includes a cloud card photo, and the contact information includes a contact photo.

In step S12, the cloud card of the first contact person is recommended to the second contact person, if the cloud card photo matches the contact photo.

Embodiments of the present disclosure provide a method and an apparatus for recommending a cloud card. The cloud card of the first contact person matched with the contact photo is acquired in the server, and the cloud card of the first contact person is pushed to the second contact person. By judging whether the cloud card in the server matches the contact information stored in the terminal of the second person according to the photo, the accuracy in matching the cloud card and the contact information is improved while the cloud card is recommended to the second contact person.

Alternatively, in one embodiment, whether the cloud card photo matches the contact photo may be determined as step A1 to step A2.

In step A1, a first similarity between the cloud card photo and the contact photo is calculated.

In step A2, if the first similarity reaches a predetermined similarity, it is determined that the cloud card photo matches the contact photo.

With the method above, by judging the first similarity, it is determined whether the cloud card photo matches the contact photo. Since the cloud card photo and the contact photo of a same person may mismatch, it may be determined that the cloud card and the contact information refer to a same person when the first similarity reaches the predetermined similarity, thus further improving an accuracy in matching the cloud card and the contact information while the cloud card is recommended to the second contact person.

Alternatively, in one embodiment, whether the cloud card photo matches the contact photo may also be determined as step B1 to step B3.

In step B 1, a face image is extracted from the cloud card photo and the contact photo, respectively.

In step B2, the face image of the cloud card photo is compared with the face image of the contact photo.

In step B3, if the face image of the cloud card photo matches the face image of the contact photo, it is determined that the cloud card photo matches the contact photo.

With the method above, by judging the face images of the cloud card photo and the contact photo, it is determined whether the cloud card photo matches the contact photo. When the face image of the cloud card photo matches the face image of the contact photo, it may be determined that the cloud card and the contact information refer to a same person, which increases a speed in judging whether the face image of the cloud card photo matches the face image of the contact photo, and further improves an accuracy in matching the cloud card and the contact information while the cloud card is recommended to the second contact person.

Alternatively, in one embodiment, whether the cloud card photo matches the contact photo may also be determined as step C1 to step C2.

In step C1, if the first similarity reaches a predetermined similarity, an occurrence number of the cloud card photo or the contact photo in cloud card photos and contact photos stored in a server is determined.

In step C2, if the occurrence number is less than or equal to a predetermined number, it is determined that the cloud card photo matches the contact photo.

With the method above, since many mismatched contact persons may select some matched network pictures as their contact photos or cloud card photos, when the occurrence number of the cloud card photo or the contact photo is larger than the predetermined number, it may be determined that the photo may be of a plurality of contact persons or cloud cards rather than a cloud card photo or contact photo of a same person. Therefore, when the occurrence number is less than or equal to the predetermined number, it is determined that the cloud card photo matches the contact photo, thus further improving an accuracy in judging whether the cloud card photo matches the contact photo.

Alternatively, after step C2, the method may further be implemented as step D1 to step D3.

In step D1, if the occurrence number is larger than the predetermined number, a second similarity between the cloud card photo and the contact photo is calculated according to the occurrence number and the first similarity. The larger the occurrence number is, the less the second similarity is relative to the first similarity.

In step D2, it is judged whether the second similarity reaches the predetermined similarity.

In step D3, if the second similarity is less than the predetermined similarity, it is determined that the cloud card photo mismatches the contact photo.

With the method above, the second similarity between the cloud card photo and the contact photo is calculated according to the occurrence number of the cloud card photo or the contact photo, and it is determined that the cloud card photo mismatches the contact photo, if the second similarity is less than the predetermined similarity. Many mismatched contact persons may select some matched network pictures as their contact photos or cloud card photos. The larger the occurrence number of the cloud card photo or the contact photo is, the less the similarity between the cloud card photo and the contact photo is, and thus it may be determined that the photo is of a plurality of contact persons or cloud cards rather than a cloud card photo or contact photo of a same person. Therefore, when the second similarity is less than the predetermined similarity, it is determined that the cloud card photo mismatches the contact photo, thus further improving an accuracy in judging whether the cloud card photo matches the contact photo.

Alternatively, in one embodiment, the method may further be implemented as step E1 to step E3.

In step E1, a normalization process is performed on the cloud card photo and the contact photo to obtain a standard photo of each of the cloud card photo and the contact photo.

In step E2, a feature point is extracted from the standard photo according to a predetermined rule.

In this case, whether the cloud card photo matches the contact photo may also be determined as step E3 to step E4.

In step E3, the feature points of the standard photos of the cloud card photo and the contact photo are compared.

In step E4, it is determined whether the cloud card photo matches the contact photo according to a comparison result of the feature points.

With the method above, by comparing the feature points of the standard photos of the cloud card photo and the contact photo, it is determined whether the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

Alternatively, in one embodiment, the method may also be implemented as step F1 to step F2.

In step F1, a normalization process is performed on the face image of each of the cloud card photo and the contact photo to obtain a standard face image of each of the cloud card photo and the contact photo.

In step F2, a feature point is extracted from the standard face image according to a predetermined rule.

In this case, step B2 may also be implemented as step F3 to step F4.

In step F3, the feature points of the standard face images of the cloud card photo and the contact photo are compared.

In step F4, it is determined whether the face image of the cloud card photo matches the face image of the contact photo according to a comparison result of the feature points.

With the method above, by comparing the feature points of the standard face images of the cloud card photo and the contact photo, it is determined whether the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

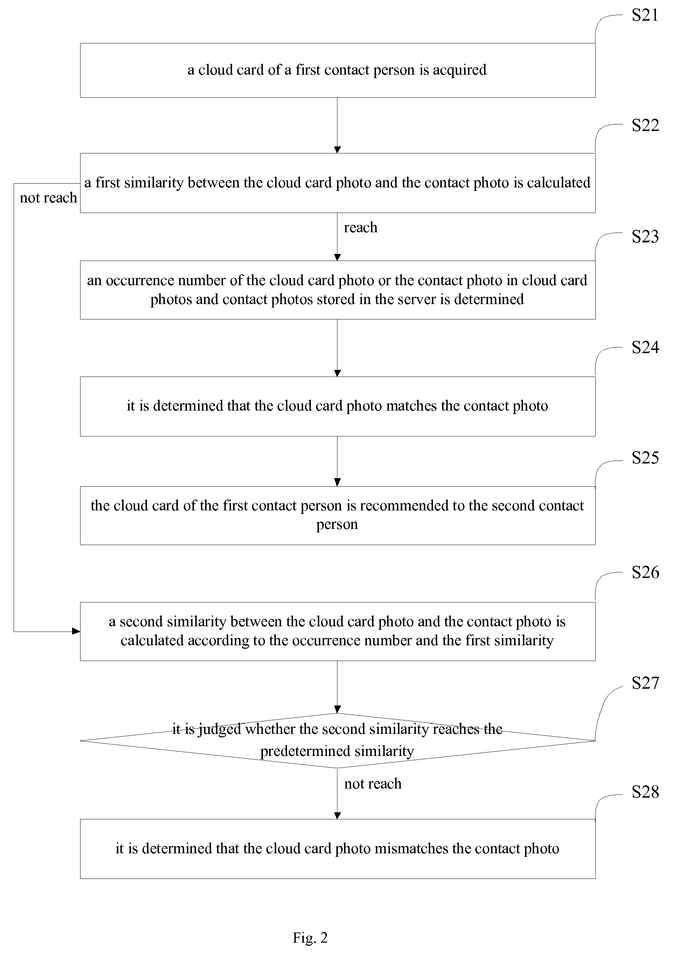

As shown in Fig. 2, embodiments of the present disclosure provide a method for recommending a cloud card, specific implementation steps of which are as follows.

In step S21, a cloud card of a first contact person and contact information stored in a terminal of a second contact person are acquired, the cloud card includes a cloud card photo, and the contact information includes a contact photo.

The server acquires the user A's cloud card locally and acquires the contact information C stored by the user B from the terminal of the user B.

In step S22, a first similarity between the cloud card photo and the contact photo is calculated.

The first similarity between the cloud card photo and the contact photo is calculated as 0.8.

In step S23, if the first similarity reaches a predetermined similarity, an occurrence number of the cloud card photo or the contact photo in all cloud card photos and contact photos stored in the server is determined. If the occurrence number is less than or equal to a predetermined number, step S24 to step S25 are executed; if the occurrence number is larger than the predetermined number, step S26 to step S28 are executed.

The predetermined similarity is 0.6, so the first similarity between the cloud card photo of the user A and the photo of the contact person C reaches the predetermined similarity. In this case, it is determined that the occurrence number of the cloud card photo of the user A in the cloud card photos and contact photos stored in the server is 4, and the occurrence number of the photo of the contact person C in the cloud card photos and contact photos stored in the server is 6.

In step S24, if the occurrence number is less than or equal to a predetermined number, it is determined that the cloud card photo matches the contact photo.

The predetermined number is 20. It may be seen that both the occurrence number of the cloud card photo of the user A in the cloud card photos and contact photos stored in the server and the occurrence number of the photo of the contact person C in the cloud card photos and contact photos stored in the server are less than the predetermined number. In this case, it may be determined that the cloud card photo matches the contact photo.

In step S25, the cloud card of the first contact person is recommended to the second contact person, if the cloud card photo matches the contact photo.

When the cloud card photo of the user A matches the photo of the contact person C, it may be determined that the user A and the contact person C are the same person. In this case, the cloud card of the user A may be recommended to the user B for storing the information of the user A in the contact person C.

In step S26, if the occurrence number is larger than the predetermined number, a second similarity between the cloud card photo and the contact photo is calculated according to the occurrence number and the first similarity. The larger the occurrence number is, the less the second similarity is relative to the first similarity.

If it is determined that the occurrence number of the cloud card photo of the user A in the cloud card photos and contact photos stored in the server is 30, and the occurrence number of the photo of the contact person C in the cloud card photos and contact photos stored in the server is 60, the second similarity between the cloud card photo of the user A and the photo of the contact person C is calculated according to the occurrence number of the cloud card photo of the user A, the occurrence number of the photo of the contact person C and the first similarity. The second similarity is inversely proportional to the occurrence number of the cloud card photo of the user A and the occurrence number of the photo of the contact person C. The occurrence number may be divided into several levels, and respective level is corresponding to a different weight which is less than 1. The occurrence number is inversely proportional to the weight, that is, the weight decreases with an increase of the occurrence number. The first similarity is multiplied by the weight to obtain the second similarity.
the second similarity = the first similarity x weight

For example, the occurrence number of the cloud card photo of the user A is 30 and the occurrence number of the photo of the contact person C is 60, then an occurrence number of a photo to be compared is 90. Provided an occurrence number 90 of a photo is corresponding to a weight 0.5, the second similarity is calculated as 0.4. If an occurrence number 200 of a photo is corresponding to a weight 0.2, the second similarity is calculated as 0.16.

In step S27, it is judged whether the second similarity reaches the predetermined similarity.

It may be seen that the second similarity 0.4 is less than the predetermined similarity 0.6.

In step S28, if the second similarity is less than the predetermined similarity, it is determined that the cloud card photo mismatches the contact photo.

Because the second similarity 0.4 is less than the predetermined similarity 0.6, it may be determined that the cloud card photo of the user A and the photo of the contact person C share a similar photo while the user A and the contact person C are two different users. Therefore, it is determined that the cloud card photo of the user A mismatches the photo of the contact person C.

Embodiments of the present disclosure provide the method for recommending a cloud card. The cloud card of the first contact person matched with the contact photo is acquired in the server, and the cloud card of the first person is pushed to the second contact person. By judging the first similarity, it is determined whether the cloud card photo mismatches the contact photo. The cloud card photo and the contact photo of the same person may not necessarily match each other, and thus when the first similarity reaches the predetermined similarity, it may be determined that the cloud card and the contact information belong to the same person, and when the first similarity reaches the predetermined similarity, by judging the occurrence number of the cloud card photo or the contact photo as well as the second similarity, a probability that different contact persons use the same photo is eliminated. With the method above, an accuracy in judging whether the cloud card photo matches the contact photo is improved, such that the cloud card of the first contact person is accurately recommended to the second contact person.

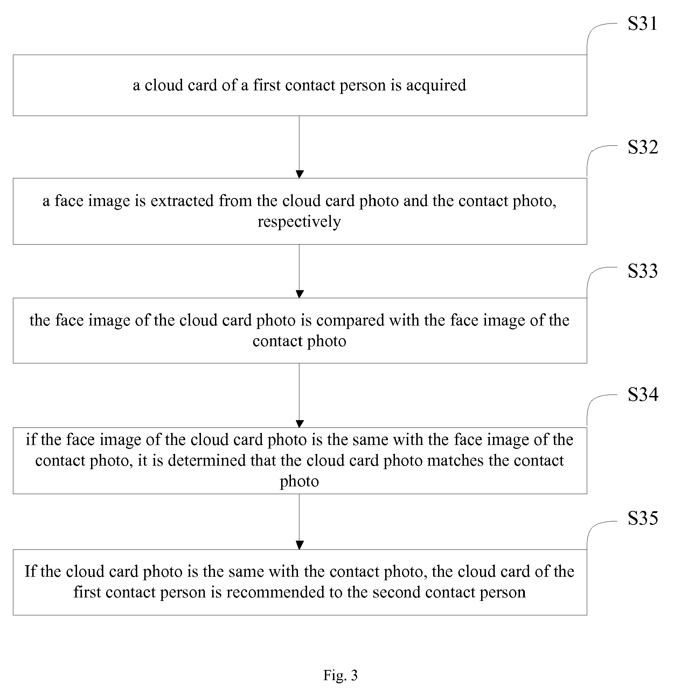

As shown in Fig. 3, embodiments of the present disclosure provide a method for recommending a cloud card, specific implementation steps of which are as follows.

In step S31, a cloud card of a first contact person and contact information stored in a terminal of a second contact person are acquired, the cloud card includes a cloud card photo, and the contact information includes a contact photo.

The server acquires the user A's cloud card locally, and acquires the contact information C stored by the user B from the terminal of the user B.

In step S32, a face image is extracted from the cloud card photo and the contact photo, respectively.

A face image A1 and a face image C1 are extracted from the cloud card photo of the user A and the photo of the contact person C, respectively.

In step S33, the face image of the cloud card photo is compared with the face image of the contact photo.

The face image A1 is compared with the face image C1.

In step S34, if the face image of the cloud card photo matches the face image of the contact photo, it is determined that the cloud card photo matches the contact photo.

When the face image A1 matches the face image C1, it is determined that the cloud card photo of the user A matches the photo of the contact person C.

In step S35, if the cloud card photo matches the contact photo, the cloud card of the first contact person is recommended to the second contact person.

When the cloud card photo of the user A matches the photo of the contact person C, it may be determined that the user A and the contact person C are the same person. In this case, the cloud card of the user A may be recommended to the user B for storing the information of the user A in the contact person C.

The embodiment of the present disclosure provides the method for recommending a cloud card. The cloud card of the first contact person matched with the contact photo is acquired in the server. By judging the face images of the cloud card photo and the contact photo, it is determined whether the cloud card photo matches the contact photo. When the face image of the cloud card photo matches the face image of the contact photo, it may be determined that the cloud card and the contact information refer to a same person, and the cloud card of the first contact person is pushed to the second contact person. A speed in judging whether the face image of the cloud card photo matches the face image of the contact photo is increased, and an accuracy in matching the cloud card and the contact information is improved while the cloud card is recommended to the second contact person.

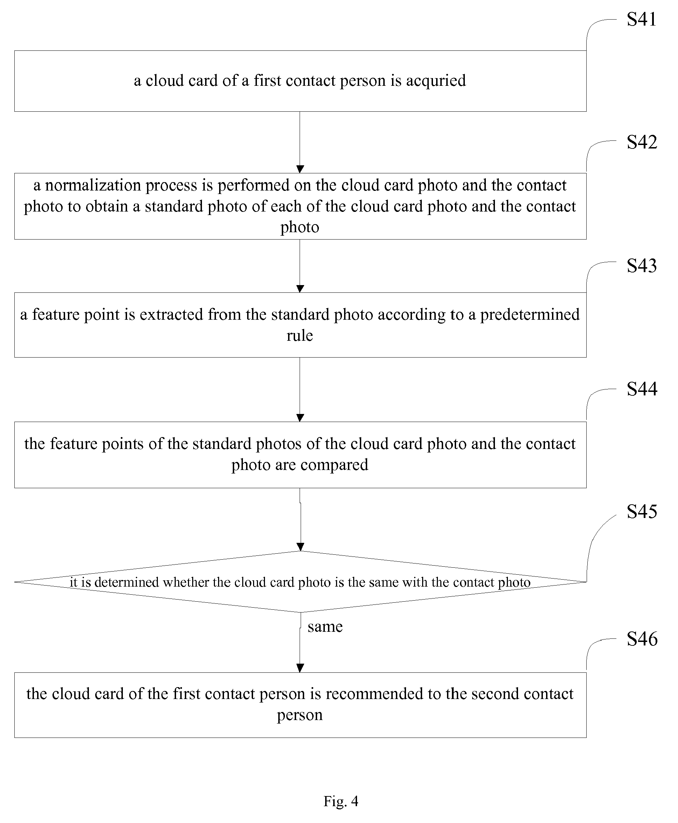

As shown in Fig. 4, embodiments of the present disclosure provide a method for recommending a cloud card, specific implementation steps of which are as follows.

In step S41, a cloud card of a first contact person and contact information stored in a terminal of a second contact person are acquired, the cloud card includes a cloud card photo, and the contact information includes a contact photo.

The server acquires the user A's cloud card locally, and acquires the contact information C stored by the user from the terminal of the user B.

In step S42, a normalization process is performed on the cloud card photo and the contact photo to obtain a standard photo of each of the cloud card photo and the contact photo.

When acquiring the contact information, the server may perform the normalization process on the cloud card photo of the user A and the photo of the contact person C to obtain a standard photo D1 of the cloud card photo of the user A and a standard photo D2 of the photo of the contact person C.

In step S43, a feature point is extracted from the standard photo according to a predetermined rule.

For extracting the feature point, the same number of feature points are extracted from the standard photo D1 and the standard photo D2, for example, the number of feature points extracted is 100, which is not conducted to limit the present disclosure, i.e., the number of feature points extracted from the standard photo D1 may be different from the number of feature points extracted from the standard photo D2. A feature point set 1 is extracted from the standard photo D1 and stored; a feature point set 2 is extracted from the standard photo D2 and stored.

In step S44, the feature points of the standard photos of the cloud card photo and the contact photo are compared.

The feature point set 1 and the feature point set 2 are compared, and it is known that there are 78 same feature points between the feature point set 1 and the feature point set 2.

In step S45, it is determined whether the cloud card photo matches the contact photo according to a comparison result of the feature points.

It may be determined that the cloud card photo of the user A matches the photo of the contact person C, according to the comparison result of step S44 that there are 78 same feature points between the feature point set 1 and the feature point set 2.

In step S46, if the cloud card photo matches the contact photo, the cloud card of the first contact person is recommended to the second contact person.

When the cloud card photo of the user A matches the photo of the contact person C, it may be determined that the user A and the contact person C are the same person. In this case, the cloud card of the user A may be recommended to the user B for storing the information of the user A in the contact person C.

The embodiment of the present disclosure provides the method for recommending a cloud card. The cloud card of the first contact person matched with the contact photo is acquired in the server. By comparing the feature points of the standard photos of the cloud card photo and the contact photo, it is determined whether the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

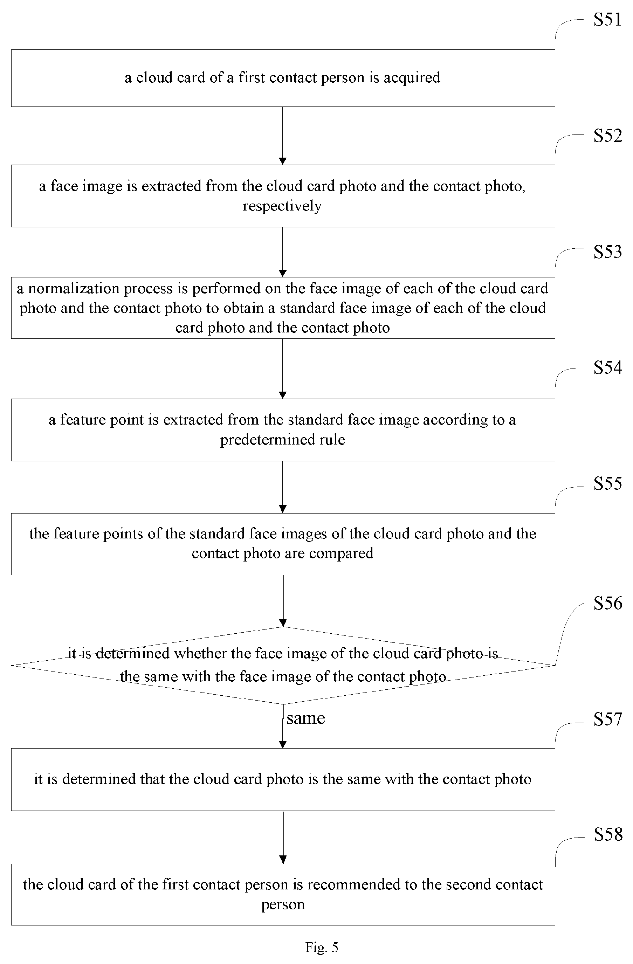

As shown in Fig. 5, embodiments of the present disclosure provide a method for recommending a cloud card, specific implementation steps of which are as follows.

In step S51, a cloud card of a first contact person and contact information stored in a terminal of a second contact person are acquired, the cloud card includes a cloud card photo, and the contact information includes a contact photo.

The server acquires the user A's cloud card locally, and acquires the contact information C stored by the user B from the terminal of the user B.

In step S52, a face image is extracted from the cloud card photo and the contact photo, respectively.

A face image E1 is extracted from the cloud card photo of the user A, and a face image E2 is extracted from the photo of the contact person C.

In step S53, a normalization process is performed on the face image of each of the cloud card photo and the contact photo to obtain a standard face image of each of the cloud card photo and the contact photo.

The normalization process is performed on the face image E1 of the cloud card photo of the user A and the face image E2 of the photo of the contact person C, to obtain the standard face image F1 of the cloud card photo of the user A and the standard face image F2 of the photo of the contact person C.

In step S54, a feature point is extracted from the standard face image according to a predetermined rule.

For extracting the feature point, the same number of feature points are extracted from the standard face image F1 and the standard face image F2, for example, the number of feature points extracted is 100, which is not conducted to limit the present disclosure, i.e., the number of feature points extracted from the standard face image F1 may be different from the number of feature points extracted from the standard face image F2. A feature point set 1 is extracted from the standard face image F1 and stored; a feature point set 2 is extracted from the standard face image F2 and stored.

In step S55, the feature points of the standard face images of the cloud card photo and the contact photo are compared.

The feature point set 1 and the feature point set 2 are compared, and it is known that there are 78 same feature points between the feature point set 1 and the feature point set 2.

In step S56, it is determined whether the face image of the cloud card photo matches the face image of the contact photo according to a comparison result of the feature points.

It may be determined that the face image E1 of the cloud card photo of the user A matches the face image E2 of the photo of the contact person C, according to the comparison result of step S44 that there are 78 same feature points between the feature point set 1 and the feature point set 2.

In step S57, when the face image of the cloud card photo matches the face image of the contact photo, it is determined that the cloud card photo matches the contact photo.

Because the face image E1 of the cloud card photo of the user A matches the face image E2 of the photo of the contact person C, it is determined that the cloud card photo of the user A matches the photo of the contact person C.

In step S58, if the cloud card photo matches the contact photo, the cloud card of the first contact person is recommended to the second contact person.

When the cloud card photo of the user A matches the photo of the contact person C, it may be determined that the user A and the contact person C are the same person. In this case, the cloud card of the user A may be recommended to the user B for storing the information of the user A in the contact person C.

The embodiment of the present disclosure provides the method for recommending a cloud card. The cloud card of the first contact person matched with the contact photo is acquired in the server. By judging the face images extracted from the cloud card photo and the contact photo, and by comparing the feature points of the standard face images of the cloud card photo and the contact photo, it is determined whether the cloud card photo matches the contact photo, and it may be determined that the cloud card and the contact information refer to the same person when the cloud card photo matches the contact photo, thus increasing a speed in comparing the cloud card photo and the contact photo, improving an accuracy in judging whether the cloud card photo matches the contact photo, and further improving an accuracy in matching the cloud card and the contact information while the cloud card is recommended to the second contact person.

In one embodiment, the cloud card photo matching the contact photo includes, for example, the cloud card photo and the contact photo containing a same face; or the cloud card photo and the contact photo being a same one; or a similarity between the cloud card photo and the contact photo exceeding a certain threshold.

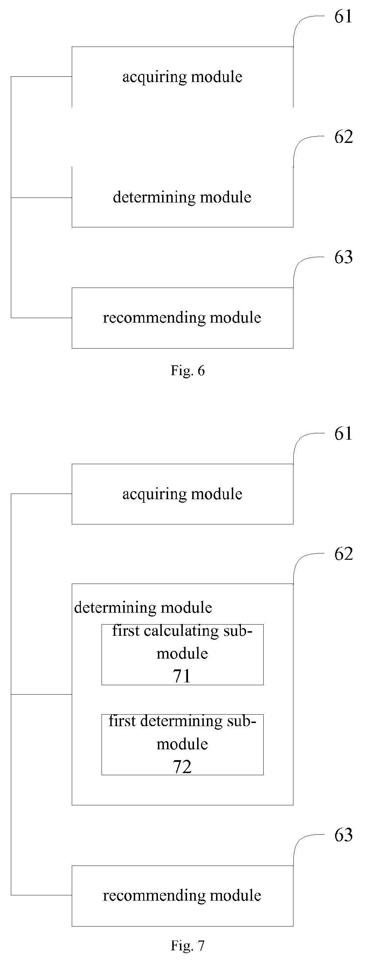

Fig. 6 is a block diagram of an apparatus for recommending a cloud card according to an example embodiment. As shown in Fig. 6, the apparatus includes an acquiring module 61, a determining module 62 and a recommending module 63.

The acquiring module 61 is configured to acquire a cloud card of a first contact person and contact information stored in a terminal of a second contact person, the cloud card comprising a cloud card photo, the contact information comprising a contact photo.

The determining module 62 is configured to compare the cloud card photo with the contact photo.

The recommending module 63 is configured to recommend the cloud card of the first contact person to the second contact person, if the cloud card photo matches the contact photo.

As shown in Fig. 7, the determining module 62 includes a first calculating sub-module 71 and a first determining sub-module 72.

The first calculating sub-module 71 is configured to calculate a first similarity between the cloud card photo and the contact photo.

The first determining sub-module 72 is configured to determine that the cloud card photo matches the contact photo, if the first similarity reaches a predetermined similarity.

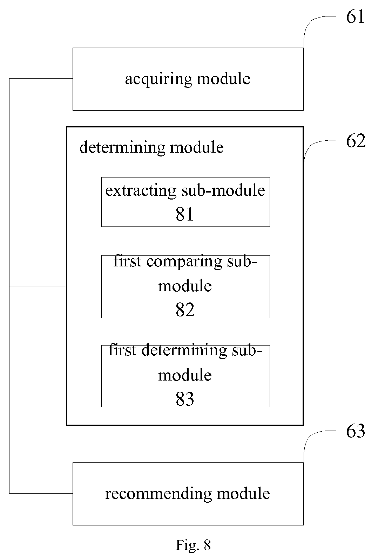

As shown in Fig. 8, the determining module 62 includes an extracting sub-module 81, a first comparing sub-module 82 and a second determining sub-module 83.

The extracting sub-module 81 is configured to extract a face image from the cloud card photo and the contact photo respectively.

The first comparing sub-module 82 is configured to compare the face image of the cloud card photo with the face image of the contact photo.

The second determining sub-module 83 is configured to determine that the cloud card photo matches the contact photo, if the face image of the cloud card photo matches the face image of the contact photo.

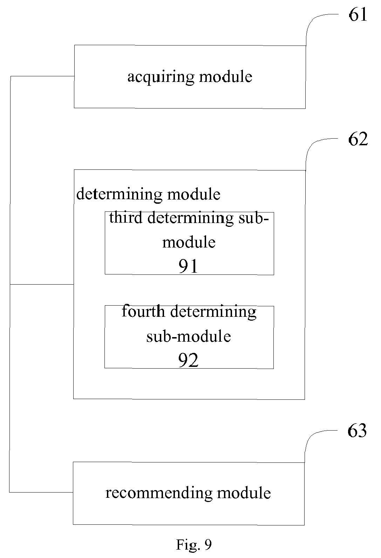

As shown in Fig. 9, the determining module 62 further includes a third determining sub-module 91 and a fourth determining sub-module 92.

The third determining sub-module 91 is configured to determine an occurrence number of the cloud card photo or the contact photo in cloud card photos and contact photos stored in a server, if the first similarity reaches a predetermined similarity.

The fourth determining sub-module 92 is configured to determine that the cloud card photo matches the contact photo, if the occurrence number is less than or equal to a predetermined number.

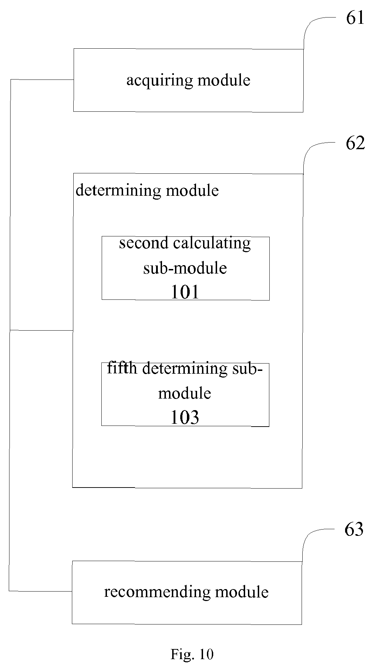

As shown in Fig. 10, the determining module further includes a second calculating sub-module 101, and a fifth determining sub-module 103.

The second calculating sub-module 101 is configured to calculate a second similarity between the cloud card photo and the contact photo according to the occurrence number and the first similarity, if the occurrence number is larger than the predetermined number, in which, the larger the occurrence number is, the less the second similarity is relative to the first similarity.

The fifth determining sub-module 103 is configured to determine that the cloud card photo mismatches the contact photo, if the second similarity is less than the predetermined similarity.

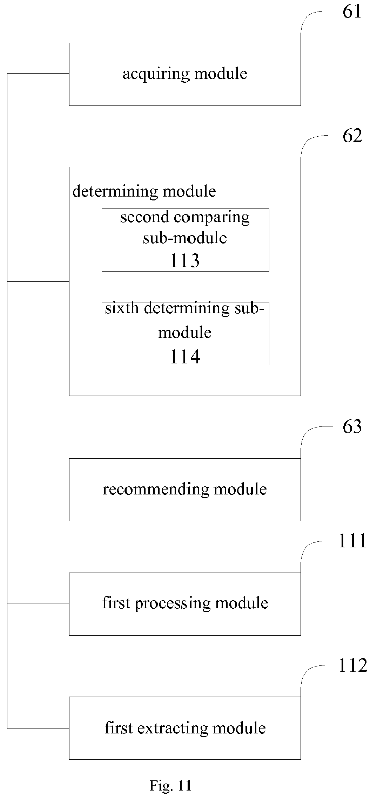

As shown in Fig. 11, the apparatus further includes a first processing module 111 and a first extracting module 112.

The first processing module 111 is configured to perform a normalization process on the cloud card photo and the contact photo to obtain a standard photo of each of the cloud card photo and the contact photo.

The first extracting module 112 is configured to extract a feature point from the standard photo according to a predetermined rule.

The determining module 62 includes a second comparing sub-module 113 and a sixth determining sub-module 114.

The second comparing sub-module 113 is configured to compare the feature points of the standard photos of the cloud card photo and the contact photo.

The sixth determining sub-module 114 is configured to determine whether the cloud card photo matches the contact photo according to a comparison result of the feature points.

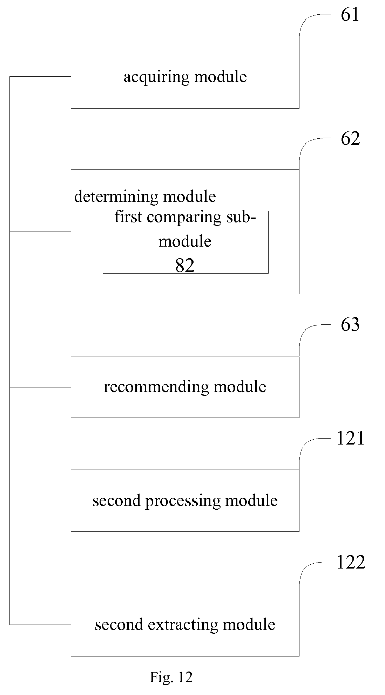

As shown in Fig. 12, the apparatus further includes a second processing module 121 and a second extracting module 122.

The second processing module 121 is configured to perform a normalization process on the face image of each of the cloud card photo and the contact photo to obtain a standard face image of each of the cloud card photo and the contact photo.

The second extracting module 122 is configured to extract a feature point from the standard face image according to a predetermined rule.

The first comparing sub-module 82 is further configured to compare the feature points of the standard face images of the cloud card photo and the contact photo; to determine whether the face image of the cloud card photo matches the face image of the contact photo according to a comparison result of the feature points.

With respect to the devices in the above embodiments, the specific manners for performing operations for individual modules therein have been described in detail in the embodiments regarding the methods for recommending a cloud card, which will not be elaborated herein.

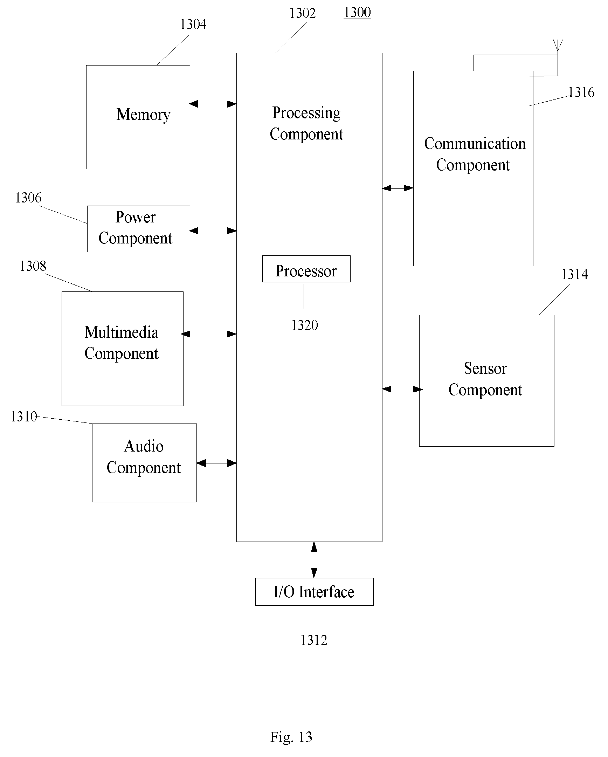

Fig. 13 is a block diagram of a device 1300 for recommending a cloud card according to an example embodiment. For example, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one example embodiment, the communication component 1316 receives a broadcast signal or broadcast associated information from an external broadcast management system via a broadcast channel. In one example embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a mobile terminal, enable the mobile terminal to execute a method for recommending a cloud card, the method including:
acquiring a cloud card of a first contact person and contact information stored in a terminal of a second contact person, the cloud card including a cloud card photo, the contact information including a contact photo;
recommending the cloud card of the first contact person to the second contact person, if the cloud card photo matches the contact photo.

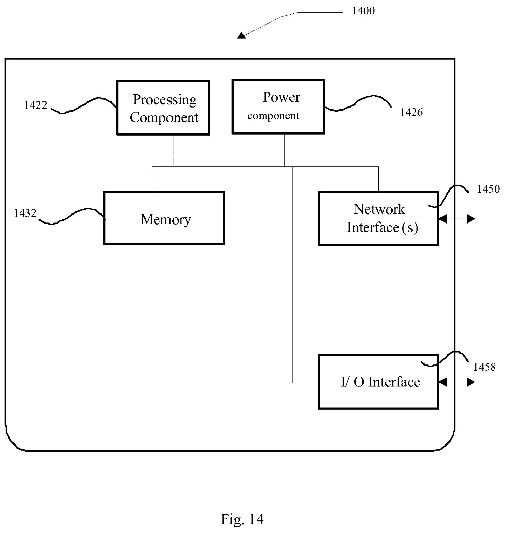

Fig. 14 is a block diagram of a device 1400 for recommending a cloud card according to an example embodiment. For example, the device 1400 may be configured as a server. Referring to Fig. 14, the device 1400 may include a processing component 1422, which further includes one or more processors, and memory resource represented by the memory 1432, for storing the instructions (e.g., the application programs) executable by the processing component 1422. The application programs stored in the memory 1432 may include one or more module each corresponding to one set of instructions. In addition, the processing component 1422 is configured to execute instructions so as to execute following method:
acquiring a cloud card of a first contact person and contact information stored in a terminal of a second contact person, the cloud card including a cloud card photo, the contact information including a contact photo;
recommending the cloud card of the first contact person to the second contact person, if the cloud card photo matches the contact photo.

The device 1400 may also include a power component 1426 configured to execute a power management of the device 1400, a wired or wireless network interfaces 1450 configured to connect the device 1400 to network, and an input/output (I/O) interfaces 1458. The device 1400 may be operated based on the operating system stored in the memory 1432, such as Windows ServerTM, Mac OS XTM, UnixTM, LinuxTM, FreeBSDTM, or the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for recommending a cloud card, comprising:
acquiring a cloud card of a first contact person and contact information stored in a terminal of a second contact person, the cloud card comprising a cloud card photo, the contact information comprising a contact photo;
recommending the cloud card of the first contact person to the second contact person, if the cloud card photo matches the contact photo.

2. The method of claim 1, comprising:
calculating a first similarity between the cloud card photo and the contact photo; and
determining that the cloud card photo matches the contact photo, if the first similarity reaches a predetermined similarity.

3. The method of claim 1 or 2, comprising:
extracting a face image from the cloud card photo and the contact photo, respectively;
comparing the face image of the cloud card photo with the face image of the contact photo; and
determining that the cloud card photo matches the contact photo, if the face image of the cloud card photo matches the face image of the contact photo.

4. The method of claim 2, further comprising:
determining an occurrence number of the cloud card photo or the contact photo in cloud card photos and contact photos, if the first similarity reaches a predetermined similarity; and
determining that the cloud card photo matches the contact photo, if the occurrence number is less than or equal to a predetermined number.

5. The method of claim 4, further comprising:
calculating a second similarity between the cloud card photo and the contact photo according to the occurrence number and the first similarity, if the occurrence number is larger than the predetermined number;
determining that the cloud card photo mismatches the contact photo, if the second similarity is less than the predetermined similarity.

6. The method of claim 1, further comprising:
performing a normalization process on the cloud card photo and the contact photo to obtain a standard photo of each of the cloud card photo and the contact photo;
extracting a feature point from the standard photo according to a predetermined rule;
comparing the feature points of the standard photos of the cloud card photo and the contact photo; and
determining whether the cloud card photo matches the contact photo according to a comparison result of the feature points.

7. The method of claim 3, further comprising:
performing a normalization process on the face image of each of the cloud card photo and the contact photo to obtain a standard face image of each of the cloud card photo and the contact photo;
extracting a feature point from the standard face image according to a predetermined rule;
comparing the feature points of the standard face images of the cloud card photo and the contact photo; and
determining whether the face image of the cloud card photo matches the face image of the contact photo according to a comparison result of the feature points.

8. An apparatus for recommending a cloud card, comprising:
an acquiring module (61), configured to acquire a cloud card of a first contact person and contact information stored in a terminal of a second contact person, the cloud card comprising a cloud card photo, the contact information comprising a contact photo;
a determining module (62), configured to determine whether the cloud card photo matches the contact photo; and
a recommending module (63), configured to recommend the cloud card of the first contact person to the second contact person, if the cloud card photo matches the contact photo.

9. The apparatus of claim 8, wherein the determining module (62) comprises:
a first calculating sub-module (71), configured to calculate a first similarity between the cloud card photo and the contact photo; and
a first determining sub-module (72), configured to determine that the cloud card photo matches the contact photo, if the first similarity reaches a predetermined similarity.

10. The apparatus of claim 8 or 9, wherein the determining module (62) comprises:
an extracting sub-module (81), configured to extract a face image from the cloud card photo and the contact photo, respectively;
a first comparing sub-module (82), configured to compare the face image of the cloud card photo with the face image of the contact photo; and
a second determining sub-module (83), configured to determine that the cloud card photo matches the contact photo, if the face image of the cloud card photo matches the face image of the contact photo.

11. The apparatus of claim 9, wherein the determining module (62) further comprises:
a third determining sub-module (91), configured to determine an occurrence number of the cloud card photo or the contact photo in cloud card photos and contact photos, if the first similarity reaches a predetermined similarity; and
a fourth determining sub-module (92), configured to determine that the cloud card photo matches the contact photo, if the occurrence number is less than or equal to a predetermined number.

12. The apparatus of claim 11, wherein the determining module (62) further comprises:
a second calculating sub-module (101), configured to calculate a second similarity between the cloud card photo and the contact photo according to the occurrence number and the first similarity, if the occurrence number is larger than the predetermined number; and
a fifth determining sub-module (103), configured to determine that the cloud card photo mismatches the contact photo, if the second similarity is less than the predetermined similarity.

13. The apparatus of claim 8, further comprising:
a first processing module (111), configured to perform a normalization process on the cloud card photo and the contact photo to obtain a standard photo of each of the cloud card photo and the contact photo; and
a first extracting module (112), configured to extract a feature point from the standard photo according to a predetermined rule;
wherein the determining module (62) comprises:
a second comparing sub-module (113), configured to compare the feature points of the standard photos of the cloud card photo and the contact photo; and
a sixth determining sub-module (114), configured to determine whether the cloud card photo matches the contact photo according to a comparison result of the feature points.

14. The apparatus of claim 10, further comprising:
a second processing module (121), configured to perform a normalization process on the face image of each of the cloud card photo and the contact photo to obtain a standard face image of each of the cloud card photo and the contact photo; and
a second extracting module (122), configured to extract a feature point from the standard face image according to a predetermined rule;
wherein the first comparing sub-module (82) is further configured to compare the feature points of the standard face images of the cloud card photo and the contact photo; to determine whether the face image of the cloud card photo matches the face image of the contact photo according to a comparison result of the feature point.

15. An apparatus for recommending a cloud card, comprising:
a processor; and
a memory for storing instructions executable by the processor;
wherein the processor is configured to:
acquire a cloud card of a first contact person and contact information stored in a terminal of a second contact person, the cloud card comprising a cloud card photo, the contact information comprising a contact photo;
recommend the cloud card of the first contact person to the second contact person, if the cloud card photo matches the contact photo.
